Europäisches Patentamt

European Patent Office

Office européen des brevets

(19)

(11) Publication number: **0 053 043**
**A1**

## (12) EUROPEAN PATENT APPLICATION

(21) Application number: **81305562.1**

(22) Date of filing: **25.11.81**

(51) Int. Cl.³: **F 16 K 31/50**
**F 16 K 1/02**

(30) Priority: **26.11.80 GB 8037861**

(43) Date of publication of application:
**02.06.82 Bulletin 82/22**

(84) Designated Contracting States:
**DE FR GB IT**

(71) Applicant: **IMI OPELLA LIMITED**
**Twyford Road Rotherwas Industrial Estate**
**Hereford HR2 6LB(GB)**

(72) Inventor: **Kellas, Alastair John**
**"Rosemount" Hope-Under-Dimore Leominster**
**Hereford Worcesteshire, HR6 0PX(GB)**

(74) Representative: **Bousfield, Roger James et al,**
**IMI LIMITED Patents and Licensing Department Kynoch**
**Works Witton**
**Birmingham B6 7BA(GB)**

(54) Valves and mechanisms therefor.

(57) A valve closure mechanism which includes a spindle which is rotatable about its longitudinal axis and a couplet, the couplet being a pair of engageable screw threads present on adjacent components that are positioned about the spindle, both components being movable axially with respect to the spindle and one component being driven by the spindle during rotation and the other component being prevented from rotational movement with respect to the spindle, whereby rotation of the spindle causes the components to move axially apart.

FIG.1.

EP 0 053 043 A1

Croydon Printing Company Ltd.

# Valves and Mechanisms therefor

This invention relates to valves for the control of fluid flow and more particularly to valves and their mechanisms for use in water taps.

In a typical water tap mechanism employing a non-rising spindle, the spindle is threadedly coupled to a component carrying the tap washer and rotation of the spindle about its axis causes longitudinal movement of the component carrying the washer and hence opening or closing of the valve. The threaded coupling between the spindle and the component can employ any useful pitch depending on the speed of closure required but it is recognised that problems can arise at relatively high pitches. These are firstly that the pressure of water acting on the component carrying the washer can cause self-opening of the valve and secondly that a high pitch coupling provides a fast closing action and this can often result in "water hammer" which at best can be noisy and at worst can damage the pipework.

However, there is often a need to provide valves having a mechanism which provides for closure of the valve after only a small amount of rotation of the spindle. For example, elbow-action taps are often installed for convenience in hospitals and the like whose mechanism must allow for opening/closing of the tap with only a ninety degree (or quarter turn) rotation of the spindle and which must provide good mechanical power.

The present invention generally overcomes the problems often associated with fast closing valves whilst maintaining good mechanical power.

In accordance with the invention, a valve closure mechanism is provided which incudes a spindle which is rotatable about its longitudinal axis and a couplet, the couplet being a pair of engageable screw threads present on adjacent components that are positioned about the spindle, both components being movable axially with respect to the spindle and one component being driven by the spindle during rotation and the other component being prevented from rotational movement with respect to the spindle, whereby rotation of the spindle causes the components to move axially apart.

The components carrying the screw threads preferably have a basic cylindrical shape, which is hollow to allow the spindle to pass through. Both components of the couplet carry a screw thread, the one on the driven component being engageable with the one on the non-driven component. Conveniently, therefore, the screw thread on one component can be on the outer surface of the cylinder and the thread on the other component can be on the inner surface of the cylinder.

To enable the spindle to drive one of the components of the couplet, the cross-sectional area of the spindle can be non-circular, for example square, and the hole in the component through which the spindle passes made an exactly corresponding size and shape. The non-driven component can also be mounted about the spindle by means of a hole in the component but with a shape, for example circular, that does not correspond with that of the spindle so that the component can be held stationary whilst the spindle is rotated.

The non-driven component must be prevented from rotational movement with respect to the spindle during rotation of the spindle. This can be achieved in a variety of ways but is preferably effected by providing the mechanism with a housing that has an internal shape and size corresponding to the shape, for example hexagonal, of the relevant part of the non-driven component. The driven component must of course be allowed to rotate with the spindle within such a housing and the relevant part of it must therefore not correspond to internal shape and size of the housing; the peripheral edge of the driven component can conveniently be circular.

In a preferred embodiment, the mechanism includes a plurality of couplets. Most preferably at least some of the components mounted about the spindle possess two screw threads on the relevant surface of the component, each thread being of a different "hand" so that one particular component can donate one of its cam threads to a first couplet and the other screw thread to a second couplet.

A component for carrying the tap closure means is also required in the mechanism and this can be conveniently mounted about the spindle also. Preferably this component may be attached to, or form part of, a driven or non-driven component, most preferably the latter.

As long as the component furthest from the top closure is secured in some way within the tap mechanism, it is not essential to urge the components together because interaction between the components during operation of the mechanism is automatic. However, means for biassing the components carrying the screw threads towards a fixed point relative to the spindle can be provided if required to ensure efficient operation of the mechanism or to obviate the need for securing the component furthest from the valve closure within the mechanism in any other way. Such biassing means can be provided, for example, by use of a spring acting on the spindle in some suitable way. In a simple two-component system both components must move axially with respect to the spindle and biassing must, therefore, be provided.

In a more preferred embodiment, therefore, the mechanism comprises a spindle about which are positioned the components providing the engageable screw threads and a component for carrying the valve closure, all these components being held within a housing, the shape of the housing and the spindle being such that alternate components carrying a screw thread are driven as the spindle rotates whereas the remainder are held within the housing and prevented from rotating with the spindle; to enable rotation of the spindle to be achieved, the end further from the valve closure extends outside the housing so that a hand wheel or other operating means can be attached thereto.  In this embodiment means are provided to hold the component furthest from the valve closure fixed to the housing.

For a better understanding of the invention and to show how it may be put into effect, reference is now made, by way of example only, to the accompanying drawings in which:

Figure 1 is a cross-sectional view of a valve closure mechanism of the invention with the valve mechanism in the open position.

Figure 2 is an enlarged schematic diagram showing the interaction of some of the components in the mechanism of Figure 1, again with the valve mechanism in the "open" position.

Figure 3 is an enlarged, schematic diagram showing the arrangement of some of the components shown in Figure 1 with the valve in the "closed" position.

Figure 4 is a cross-sectional view of the valve mechanism of Figure 1 taken along the line 2-2.

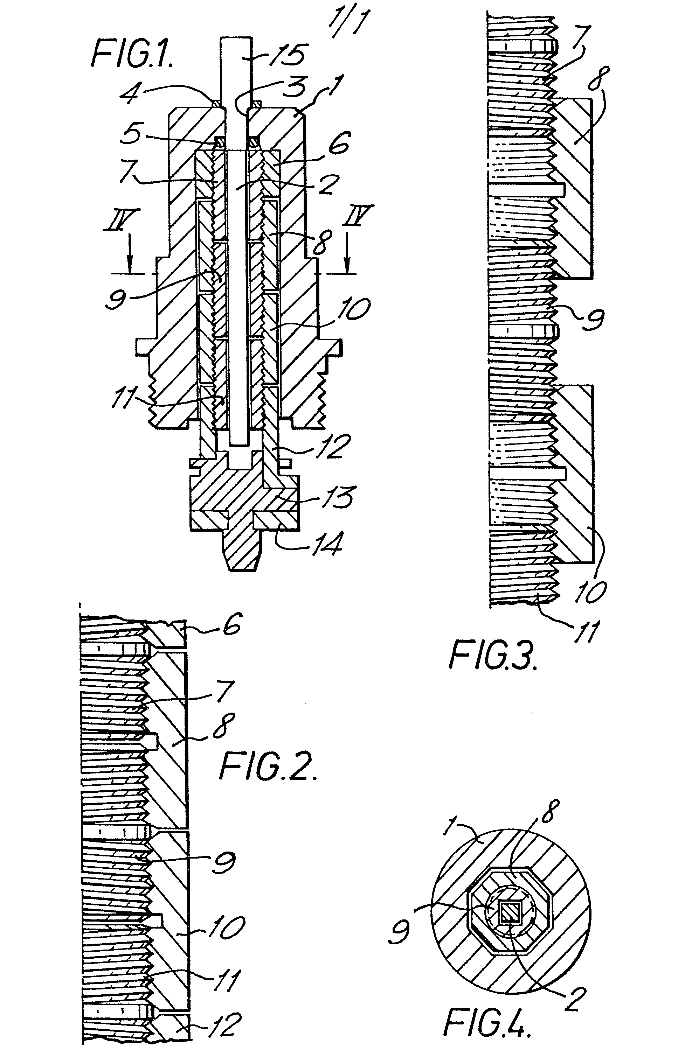

Referring to Figure 1, the mechanism shown therein has a housing 1 of essentially cylindrical shape but having an octagonel inner surface.  A spindle 2 is positioned within a circular hole 3 of the housing 1 and prevented from longitudinal movement by means of a ring 4.  Leakage past the spindle is prevented by means of an O-ring 5.  The spindle 2 has a square cross-sectional except for that part which is situated within the hole 3 so that rotation of the spindle 2 about its longitudinal axis is possible.

Referring also to Figure 2 and 4, cylindrically-shaped components 6, 7, 8, 9,10 and 11 are positioned about the spindle 2.  Component 6 is prevented from movement with respect to the spindle 2 because it is attached to the top portion of the housing 1 by means not shown.

A component 12 carrying a valve closure 13 (including a washer 14) is also positioned about the spindle 2.

All the components 6 to 11 inclusive are essentially cylindrical and each outer face of the components 7, 9 and 11 and each inner surface of te components 8 and 10, possesses a pair of screw threads of different hand.  Component 6 possesses one screw thread only as does the upper portion of component 12. Each of the screw threads is engageable with a screw thread on an adjacent component and couplets are therefore defined between components 6 and 7, 7 and 8, 8 and 9, 9 and 10, 10 and 11, and 11 and 12.

Components 7, 9 and 11 are positioned about the spindle 2 by means of square cross-sectional holes which correspond to the cross-sectional area of the spindle 2.  Rotation of the spindle about its longitudinal axis therefore causes rotation of these components.  Components 6, 8, 10 and 12 are positioned about the spindle 2 but spaced therefrom by means of their engaging surfaces with components 7, 9 and 11 and they are not therefore driven by the spindle. However, components 6, 8, 10 and 12 have octagonal peripheries corresponding to the inner surface of the housing 1 and cannot therefore rotate within the housing.

Rotation of the spindle 2, for example by means (not shown) attached to the end 15 of the spindle causes rotation of components 7, 9 and 11 within the housing 1 but components 6, 8, 10 and 12 are held within the housing and therefore do not rotate. Interaction between the screw threads of each couplet causes each component 7 to 12 inclusive together with the component 13 carrying the valve closure, to move down the spindle, ie away from the O-ring 5. Rotation of the spindle will normally be restricted to .90 degrees but rotation could continue further before the limit of screw thread engagement is reached.

The valve closure 13 is secured to the component 12 by means of a ring positioned within a groove 16 defined between engaging castellations in the component 12 and the valve closure 13.

The mechanism is in use held within a valve body by interengagement between screw threads 17 on the housing 1 and complementary threads on the body. The body will of course define a valve seat for receiving the washer 14 of the valve closure 13. The components in the position shown in Figure 2 therefore represent the valve mechanism in its "open" position and those shown in Figure 3 represent the valve mechanism in its "closed" position.

Claims

1      A valve closure mechanism which includes a spindle which is rotatable about its longitudinal axis and a couplet, the couplet being a pair of engageable screw threads present on adjacent components that are positioned about the spindle, both components being movable axially with respect to the spindle and one component being driven by the spindle during rotation and the other component being prevented from rotational movement with respect to the spindle, whereby rotation of the spindle causes the components to move axially apart.

2      A valve mechanism according to Claim 1 in which the components carrying the screw threads have a cylindrical shape and are hollow to allow the spindle to pass through.

3      A valve mechanism according to Claim 2 in which the screw thread on one component is on its outer surface and the thread on the other component is on its inner surface.

4      A valve mechanism according to Claim 2 or Claim 3 in which the cross-sectional area of the spindle is non-circular and the hole in the driven component  through which the spindle passes is made an exactly corresponding size and shape.

5      A valve mechanism according to any one of Claims 2 to 4 in which the cross-sectional area of the spindle is non-circulr and the hole in the non-driven component through which the spindle passes is circular.

6      A valve mechanism according to any one of Claims 2 to 5 in which the components are held within a housing having an internal shape and size which corresponds to that of the relevant part of the non-driven component but which does not correspond to the shape and size of the relevant part of the driven component, thereby allowing the driven component to rotate within the housing.

7       A valve mechanism according to any preceding Claim which includes a plurality of couplets.

8       A valve mechanism according to Claim 7 in which at least some of the components mounted about the spindle possess two screw threads on the relevant surface of the component, each thread being of a different "hand" so thst one particular component can donate one of its threads to a first couplet and the other screw thread to a second couplet.

9       A valve mechanism according to any preceding claim in which means are provided for biassing the components carrying the screw threads towards a fixed point relative to the spindle.

0053043

1/1

FIG.1.

FIG.2.

FIG.3.

FIG.4.

European Patent Office

**EUROPEAN SEARCH REPORT**

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | US - A - 2 629 580 (C.F. SCHULTIS)<br>* Fig. 2 *<br>-- | | F 16 K 31/50<br>F 16 K 1/02 |
| A | US - A - 2 596 419 (E.W. LOWE)<br>* Fig. 1,7 *<br>---- | | |

**TECHNICAL FIELDS SEARCHED (Int.Cl. ³)**

F 16 K 1/00
F 16 K 31/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | | |
|---|---|---|---|
| Place of search<br>VIENNA | Date of completion of the search<br>02-03-1982 | Examiner<br>ROUSSARIAN | |

EPO Form 1503.1   06.78